# EUROPÄISCHE PATENTSCHRIFT

(11) **EP 0 763 506 B1**
(45) Veröffentlichungstag und Bekanntmachung des Hinweises auf die Patenterteilung: **06.06.2001**
(21) Anmeldenummer: 96111826.2
(22) Anmeldetag: 23.07.1996
(51) Int. Cl.: C04B 28/34, C04B 38/08

(54) **Verfahren zur Herstellung von Leicht-Formkörpern und damit hergestellter Leicht-Formkörper, insbesondere Leicht-Dämmplatte**
Process for producing lightweight bodies and the lightweight bodies so obtained, e.g. lightweight insulating boards
Procédé pour la fabrication de corps légers et les corps légers ainsi obtenus, p.ex. des panneaux isolants légers

(30) Priorität: 18.09.1995 DE 19534600
(43) Veröffentlichungstag der Anmeldung: 19.03.1997
(73) Patentinhaber: Dennert Poraver GmbH, 92353 Postbauer-Heng (DE)
(72) Erfinder: Seger, Michael, Ing., 92318 Neumarkt (DE)
(74) Vertreter: Rau, Manfred, Dr. Dipl.-Ing.

(56) Entgegenhaltungen:
- EP-A- 0 133 733
- EP-A- 0 217 569
- EP-A- 0 634 377
- FR-A- 2 264 789
- US-A- 2 865 772
- US-A- 3 958 582
- CHEMICAL ABSTRACTS, vol. 115, no. 18, 4.November 1991 Columbus, Ohio, US; abstract no. 188540w, K. ZHONG, ET AL.: Seite 337; XP000256304 & CN-A-1 051 033 (ID.)
- CHEMICAL ABSTRACTS, vol. 111, no. 6, 7.August 1989 Columbus, Ohio, US; abstract no. 44296r, V. KOPEIKIN, ET AL: Seite 315; XP000059158 & SU-A-1 432 034 (ID.)
- CHEMICAL ABSTRACTS, vol. 82, no. 14, 7.April 1975 Columbus, Ohio, US; abstract no. 89587k, H. TAKAHASHI: Seite 223; XP000185828 & JP-A-07 499 715 (ID.)

## Beschreibung

Die Erfindung betrifft ein Verfahren zur Herstellung von Leicht-Formkörpern, insbesondere wasserfester, wärmeisolierender Leicht-Dämmplatten, sowie einen solchen Leicht-Formkörper, wie er insbesondere zu Bauisolationszwecken einsetzbar ist.

Aus dem Stand der Technik sind verschiedene Verfahren bekannt, aus Blähglas- oder Blähton-Granulat als anorganischen Leichtzuschlagstoff die in Rede stehenden Leicht-Formkörper herzustellen. Diesen Verfahren ist gemeinsam, daß der granulatförmige Leichtzuschlagstoff mit einer anorganischen Bindemittellösung innig vermengt und das Gemenge in Formen dosiert, verdichtet sowie zur Aushärtung der Formkörper getrocknet werden. Besonderes Augenmerk wird hierbei auf die Auswahl der Bindemittellösung gelegt, da diese die Eigenschaften des Produktes, wie Wasserfestigkeit, Strukturstabilität und Brandverhalten entscheidend mitbeeinflußt.

Aus der EP-A-634377 ist ein Verfahren zur Herstellung von Formkörpern auf der Basis geschäumter Alkalisilikat-Teilchen und einer wässrigen Lösung von Monoaluminiumphosphat bekannt. Die beiden Komponenten werden dabei gemischt, in eine Form eingefüllt und auf eine Temperatur von 100 bis 500°C erhitzt.

Aus der DE 44 46 011 A1 ist es beispielsweise bekannt, als Bindemittel eine Schlämme aus Tonerdezement und Elektrofilterasche oder Schamottemehl zur Bindung von Blähglas in einem Formkörper zu verwenden. Nachteilig bei diesem Bindemittel ist die relativ lange Abbinde- und Aushärtezeit, die bis zu einigen wenigen Tagen betragen kann. Durch Zugabe eine Härtungsbeschleunigers kann die Abbindezeit zwar verkürzt werden, jedoch ist auch dann eine Wartezeit in der Größenordnung von 90 Minuten bis zum Enttopfen des Formstückes in Kauf zu nehmen. Um eine befriedigende Herstellungskapazität bei diesem bekannten Verfahren zu erreichen,
müssen also eine Vielzahl von Formen bereitgehalten werden, was sich nachteilig auf die Investitions- und Betriebskosten der das Verfahren umsetzenden Fertigungsanlage auswirkt. Darüber hinaus muß aufgrund der Neigung der Formmasse zur Bildung von Luftnestern beim Gießen in die Form mit einer Fallhöhe von ca. zwei Metern beim Füllvorgang gearbeitet werden, was einem sauberen Herstellungsvorgang entgegensteht.

Aus der DE 32 46 502 A1 ist ferner ein Verfahren zur Herstellung von Formkörpern aus Schaumglasgranulaten bekannt, bei dem als Bindemittel eine Wasserglaslösung verwendet wird. Wasserglasgebunde Formkörper weisen nun eine beschränkte Wasserfestigkeit auf. Um diese zu erhöhen ist in der vorgenannten Druckschrift angegeben, Metalloxide oder Mineralien - beispielsweise Zinkoxid, Eisenoxid, Rotschlamm, Aluminiumoxid, Ton, Glimmer oder Quarzmehl - zuzugeben, die das Wasserglas nicht fällen, wobei dann eine Reaktion zwischen dem Wasserglas und den vorgenannten Stoffen eintritt. Diese Reaktion soll zu einer beträchtlichen Erhöhung der Festigkeit der Masse führen. Weiterhin bringt es die Verwendung dieser Stoffe mit sich, daß auf spezielle Gelier- oder Härtemittel verzichtet werden kann, so daß die Rohmasse praktisch beliebige Zeit verformbar und vergießbar bleibt. Das vorstehende Verfahren ist dahingehend nachteilig, daß für die Aufbereitung und Zugabe der angegebenen Zusatzstoffe ein zusätzlicher Herstellungsaufwand beispielsweise für eine Feinmahlung der zuzusetzenden Metalloxide oder Mineralien zu verzeichnen ist.

Der Erfindung liegt nun die Aufgabe zugrunde, ein Verfahren zur Herstellung von Leicht-Formkörpern anzugeben, mit dem solche Formkörper in verfahrenstechnisch einfacher Weise unter Erzielung verbesserter Produkteigenschaften, wie höchste Wasserfestigkeit und Nicht-Brennbarkeit, hergestellt werden können.

Diese Aufgabe wird durch die im Kennzeichnungsteil des Anspruches 1 angegebenen Merkmale gelöst. Demnach wird als Bindemittellösung eine wässrige Silikat-Phosphat-Lösung verwendet. Diese Bindemittellösung bildet eine wasser- und feuerfeste Bindemittelmatrix, in der die Blähglas- bzw. Blähton-Granulatkörper stabil eingebettet werden. Somit können gemäß dem erfindungsgemäßen Verfahren Leicht-Formkörper zu Bauisolationszwecken hergestellt werden. Dabei kann es sich beispielsweise um wärmeisolierende Leicht-Dämmplatten handeln, die durch übliche Befestigungstechniken - beispielsweise Verlegen mit beliebigen hydraulisch abbindenden Mörtel - vor dem Verputzen auf das Außenmauerwerk eines Gebäudes aufgebracht werden. Ferner können als Beispiele für solche Leicht-Formkörper halbzylindrische Isolationsschalen für Rohre und Leitungen genannt werden. Auch Formkörper mit anwendungsspezifischen Spezialgestaltungen sind herstellbar. Aufgrund des sehr guten Wärmedämmwertes dieser Formkörper (Wärmeleitfähigkeit in der Größenordnung von 0,06 W/mK) eignen sich die Formkörper hervorragend für alle Einsatzgebiete der baulichen Wärmeisolierung. Auch zur Schallisolierung sind die Formkörper einsetzbar. Von weiterem Vorteil ist die einfache Bearbeitbarkeit der Formkörper, die in üblicher Weise durch Sägen und Schleifen zugeschnitten und oberflächenbehandelt werden können. Hinsichtlich der Feuerfestigkeit erfüllen die Formkörper ferner die DIN-Vorschrift 4102 und sind in die entsprechende Klasse A1 einzuordnen.

Die Unteransprüche 2 bis 8 geben bevorzugte Ausführungsformen des erfindungsgemäßen Verfahrens an. Demgemäß liegt der Anteil der Bindemittellösung in dem Gemenge im Bereich von 1 bis 50 Gew.-%, vorzugsweise zwischen 5 und 15 Gew.-%. Bei Verwendung der alkalischen Silikat-Phosphat-Lösung als Bindemittel kann diese bis zu 55% P₂O₅ und bis zu 25% SiO₂ (Rest Wasser) enthalten.

Der Grad der Verdichtung des Granulat-Bindemittel-Gemenges richtet sich nach der geforderten Festigkeit der daraus herzustellenden Formkörper. Für niedrigere Festigkeitswerte kann eine Verdichtung allein durch den Fülldruck beim Dosieren des Gemenges in die Form ausreichen. Für höhere Festigkeitswerte ist das Gemenge durch Rütteln der Form oder durch Pressen mit einem Druck bis 100 kN, vorzugsweise 5 bis 20 kN zu verdichten. Durch diese entsprechenden Maßnahmen können Druckfestigkeitswerte bis in eine Größenordnung von 100 N/cm² erreicht werden.

Zum schnellem Aushärten des Formkörpers ist als weitere verfahrenstechnische Maßnahme vorgesehen, die Formkörper bei Temperaturen bis 350°C zu trocknen. Als günstiger Temperaturbereich hat sich dabei 150 bis 200°C herausgestellt.

Als Variante zur Bildung der Silikat-Phosphat-Lösung im Gemenge können pulverförmiges, inhibiertes polymeres Silikat-Phosphat und Wasser zugegeben werden. Die beiden Komponenten sind dabei gleichzeitig oder zeitlich getrennt voneinander unterzumischen.

Die Ansprüche 9 bis 12 betreffen Leicht-Formkörper, wie sie mit dem vorstehend erörterten Herstellungsverfahren zu fertigen sind. Derartige Formkörper bestehen demnach aus Blähglas oder Blähton-Granulat als anorganischem Leichtzuschlagstoff und einer Bindemittel-Matrix, die aus einer Silikat-Phosphat-Lösung gebildet ist.

Als bevorzugter Korngrößenbereich des Blähglas- oder Blähton-Granulates hat sich ein Bereich zwischen 0,5 und 8 mm herauskristallisiert.

Zur Verbesserung des äußeren Erscheinungsbildes des Formkörpers - dieser soll insbesondere eine möglichst ebene Oberfläche besitzen - kann der Formkörper gemäß einer bevorzugten Ausführungsform mit einer dichten Außenschicht versehen sein, die aus Blähglas- oder Blähton-Granulat versetzt mit der angegebenen Bindemittel-Lösung besteht, wobei die Granulatgröße der Außenschicht etwa 10% bis 50% der Granulatgröße des eigentlichen Formkörpers entspricht. Durch die Verwendung eines Leichtzuschlagstoffes auch in der Außenschicht trägt diese wirkungsvoll zum Isolationsverhalten des Formkörpers bei.

Gemäß einer weiteren bevorzugten Ausführungsform ist zur Stabilitätserhöhung des Formkörpers vorgesehen, in diesen ein Stützteil vorzugsweise aus Kunststoff- oder Metallgewebe zu integrieren. Ein solches Stützteil kann mittig bezogen auf die Plattendicke oder auch im Bereich der Plattenoberfläche(n) angeordnet sein.

Weitere Merkmale, Einzelheiten und Vorteile der Erfindung ergeben sich aus der nachfolgenden Beschreibung von Ausführungsbeispielen.

Es ist vorauszuschicken, daß für die eigentliche Formgebung des Gemenges aus Granulat und Bindemittellösung verschiedene übliche Formprozesse eingesetzt werden können. So kann das Gemenge kontinuierlich auf ein endlos laufendes Stahlband aufdosiert werden, welches mit entsprechenden Ober- und Seitenbändern eine Strangpreßform analog dem gewünschten Plattenquerschnitt bildet. Das so zu einem Plattenstrang geformte Gemenge wird durch Preßwalzen gepreßt, durchläuft eine Heizstrecke zur Aushärtung und wird anschließend zu Platten gewünschter Abmessungen abgelängt. Damit läßt sich eine besonders rationelle Fertigung durchführen.

Das Verfahren läßt sich allerdings auch mit üblichen kastenartigen Formen realisieren, indem das Gemenge dort eindosiert, gegebenenfalls durch Rütteln der Form oder durch einen Preßstempel von oben verdichtet und der damit gebildete Formkörper z.B. in Form der Ausgestaltung einer Dämmplatte nach einer gewissen Ansteifungszeit entformt und durch Trocknung ausgehärtet werden.

Als besonders vorteilhaft bei einem solchen diskontinuierlichen Formgebungsprozeß hat sich das Eindosieren des Gemenges in Etagenformen herauskristallisiert, die in eine Mehrfach-Etagenpresse eingefahren wird, wodurch das Gemenge entsprechend gepreßt werden kann. Durch Beheizung erfolgt ein schnelles Abbinden des Plattenmaterials, wonach Großformatplatten, die durch eine entsprechende Dimensionierung der Etagenformen gebildet werden, nach dem Austrocknen auf Maß geschnitten werden können.

Folgende konkreten Ausführungsbeispiele für einen Gemenge-Ansatz und dessen Weiterverarbeitung sind anzugeben:

### Beispiel 1

Aus den Ausgangsstoffen

| | |
|---|---|
| 100 kg | Blähglas-Granulat (Korngröße 2 bis 4 mm, spezifisches Gewicht 240 g/l) |
| 16 kg | alkalische Silikat-Phosphat-Lösung (P₂O₅-Anteil 3,5 Gew.-%, SiO₂-Anteil 18 bis 19 Gew.-%, Rest Wasser, pH-Wert der 1%-igen Lösung : ca. 11, Konsistenz leicht viskos) |
| 10 kg | Wasser |

werden in einem Mischer intensiv gemischt, in Formen dosiert, mit 6,5 kp/cm² (= 650 kPa) gepreßt und bei 180°C getrocknet und gehärtet. Es ergibt sich eine wasserfeste und nach DIN 1402 nicht brennbare Platte, die eine Dichte von 290 kg/m³ aufweist. Die Platte kann eine Dicke von 40 mm aufweisen. Die Druckfestigkeit der Platte beträgt ca. 85 N/cm².

### Beispiel 2

Die Ausgangsstoffe

| | |
|---|---|
| 20 kg | Schaumglas-Granulat (Korngröße 0,5 bis 1,0 mm) |
| 35 kg | Schaumglas-Granulat (Korngröße 1,0 bis 2,0 mm) |
| 20 kg | Schaumglas-Granulat (Korngröße 2,0 bis 4,0 mm) |
| 10 kg | Schaumglas-Granulat (Korngröße 4,0 bis 6,0 mm) |
| 15 kg | Silikat-Phosphat-Bindemittel (pulverisiert, P₂O₅-Anteil 54%, SiO₂-Anteil 10%) |
| 22,5 kg | Wasser |

werden wie in Beispiel 1 aufbereitet, jedoch mit 19,5 kp/cm² (= 1950 kPa) gepreßt und anschließend bei 150°C getrocknet. Es ergibt sich eine Dichte des damit hergestellten Formkörpers z.B. in Ausgestaltung einer Dämmplatte in Höhe von 335 kg/m³. Die Druckfestigkeit beträgt der Platte 110 N/cm².

### Beispiel 3

Die Ausgangsstoffe

| | |
|---|---|
| 25 kg | Schaumglas-Granulat (Korngröße 0,5 bis 1,0 mm) |
| 40 kg | Schaumglas-Granulat (Korngröße 1,0 bis 2,0 mm) |
| 20 kg | Schaumglas-Granulat (Korngröße 2,0 bis 4,0 mm) |
| 15 kg | wässrige Mono-Aluminium-Phosphat-Lösung (Al(H₂PO₄)₃ mit Al₂O₃-Anteil 8 bis 9% und P₂O₅-Anteil 35 bis 37%, pH-Wert der 1%-igen Lösung ca. 2,0 bis 2,3) |

werden wie in Beispiel 2 verarbeitet. Es ergibt sich ein Formkörper beispielsweise in Ausgestaltung einer Wärmedämmplatte mit einer Dichte von 353 kg/m³ und einer Druckfestigkeit von 105 N/cm².

## Patentansprüche

1. Verfahren zur Herstellung von Leicht-Formkörpern, insbesondere wasserfester, wärmeisolierender Leicht-Dämmplatten, aus Blähglas- oder Blähton-Granulat als anorganischem Leichtzuschlagstoff und einer anorganischen Bindemittel-Lösung, wobei der Leichtzuschlagstoff mit der Bindemittel-Lösung innig vermengt und das Gemenge in ein Formwerkzeug dosiert, verdichtet sowie zur Aushärtung des Formkörpers getrocknet werden, dadurch gekennzeichnet, daß als Bindemittel-Lösung eine wässrige Silikat-Phosphat-Lösung verwendet wird.

2. Verfahren nach Anspruch 1, dadurch gekennzeichnet, daß der Anteil der Bindemittel-Lösung in dem Gemenge im Bereich von 1 bis 50 Gew.-%, vorzugsweise 5 bis 15 Gew.-% liegt.

3. Verfahren nach Anspruch 1 oder 2, dadurch gekennzeichnet, daß die alkalische Silikat-Phosphat-Lösung bis zu 55% P₂O₅ und bis 25% SiO₂, Rest Wasser enthält.

4. Verfahren nach einem der Ansprüche 1 bis 3, dadurch gekennzeichnet, daß das Gemenge durch den Fülldruck beim Dosieren in eine Form verdichtet wird.

5. Verfahren nach einem der Ansprüche 1 bis 4, dadurch gekennzeichnet, daß das Gemenge durch Rütteln der Form verdichtet wird.

6. Verfahren nach einem der Ansprüche 1 bis 5, dadurch gekennzeichnet, daß das Gemenge durch Pressen mit einem Druck bis 1000 kPa vorzugsweise 500 bis 2000 kPa verdichtet wird.

7. Verfahren nach einem der Ansprüche 1 bis 6, dadurch gekennzeichnet, daß die Trocknung des Formkörpers zu seiner Aushärtung bei Temperaturen bis 350°C, vorzugsweise von 150 bis 200°C erfolgt.

8. Verfahren nach einem der Ansprüche 1 bis 7, dadurch gekennzeichnet, daß zur Bildung der Silikat-Phosphat-Lösung im Gemenge diesem pulverförmiges, inhibiertes polymeres Silikat-Phosphat und Wasser zugegeben werden.

9. Leicht-Formkörper, insbesondere wasserfeste, wärmeisolierende Leicht-Dämmplatte, hergestellt nach einem der Ansprüche 1 bis 9, dadurch gekennzeichnet, daß der Formkörper aus Blähglas- oder Blähton-Granulat als anorganischem Leichtzuschlagstoff und einer Bindemittel-Matrix, gebildet aus wässriger Silikat-Phosphat-Lösung, besteht.

10. Leicht-Formkörper nach Anspruch 9, dadurch gekennzeichnet, daß die Korngröße des Blähglas- oder Blähton-Granulats zwischen 0,5 und 8 mm liegt.

11. Leicht-Formkörper nach Anspruch 10 oder 11, dadurch gekennzeichnet, daß der Formkörper mit einer dichten Außenschicht versehen ist, die aus Blähglas- oder Blähton-Granulat versetzt mit der Bindemittel-Lösung besteht, wobei die Granulatgröße der Außenschicht etwa 10% bis 50% der Granulatgröße des eigentlichen Formkörpers entspricht.

12. Leicht-Formkörper nach einem der Ansprüche 9 bis 11, dadurch gekennzeichnet, daß in den Formkörper ein Stützteil, vorzugsweise aus Kunststoff- oder Metallgewebe, integriert ist.

## Claims

1. Method of producing formed lightweight bodies, in particular waterproof, heat-insulating lightweight insulating boards, of expanded glass pellets or expanded clay pellets as an inorganic lightweight aggregate and an inorganic binder solution, the lightweight aggregate being intimately mixed with the binder solution and the mixture being metered into a mold, compacted and dried for the formed body to cure, characterized in that an aqueous silicate-phosphate solution is used as a binder solution.

2. Method according to claim 1, characterized in that the percentage of the binder solution in the mixture is in the range of 1 to 50 % by weight, preferably 5 to 15 % by weight.

3. Method according to claim 1 or 2, characterized in that the alkaline silicate-phosphate solution contains as much as 55 % P₂O₅ and up to 25 % SiO₂ and the rest is water.

4. Method according to one of claims 1 to 3, characterized in that the mixture is compacted by the injection pressure when metered into a mold.

5. Method according to one of claims 1 to 4, characterized in that the mixture is compacted by mold ramming.

6. Method according to one of claims 1 to 5, characterized in that the mixture is compacted by squeezing at a pressure of up to 1000 kPa, preferably 500 to 2000 kPa.

7. Method according to one of claims 1 to 6, characterized in that drying the formed body for it to cure takes place at temperatures of up to 350°C, preferably of 150 to 200°C.

8. Method according to one of claims 1 to 7, characterized in that pulverulent, inhibited polymeric silicate-phosphate and water are added to the mixture for the formation of the silicate-phosphate solution therein.

9. Formed lightweight body, in particular waterproof, heat insulating lightweight insulating board, manufactured according to one of claims 1 to 9, characterized in that the formed body consists of expanded glass pellets or expanded clay pellets as an inorganic lightweight aggregate and a binder matrix formed from an aqueous silicate-phosphate solution.

10. Formed lightweight body according to claim 9, characterized in that the pellet size of the expanded glass pellets or expanded clay pellets ranges between 0.5 and 8 mm.

11. Formed lightweight body according to claim 10 or 11, characterized in that the formed body is provided with an impervious outer layer, which consists of expanded glass pellets or expanded clay pellets with the binder solution added thereto, the pellet size of the outer layer corresponding to approximately 10 % to 50 % of the pellet size of the virtual formed body.

12. Formed lightweight body according to one of claims 9 to 11, characterized in that a support member, preferably of plastic of metal fabric, is integrated in the formed body.

## Revendications

1. Procédé pour la fabrication de corps moulés légers, notamment de panneaux isolants légers hydrofuges et calorifuges, en granulés de verre expansé ou d'argile expansée comme liant à solution inorganique, les agrégats légers étant mélangés intimement avec le liant à solution et le mélange étant dosé dans un moule, serré ainsi que séché pour le durcissement du corps moulé, caractérisé en ce qu'une solution silicate-phosphate aqueuse est utilisée comme liant à solution.

2. Procédé selon la revendication 1, caractérisé en ce que le pourcentage de liant à solution dans le mélange est de l'ordre de 1 jusqu'à 50 % en poids, de préférence 5 à 15 % en poids.

3. Procédé selon la revendication 1 ou 2, caractérisé en ce que la solution silicate-phosphate alcaline comprend jusqu'à 55 % P₂O₅ et jusqu'à 25 % SiO₂ et le restant est de l'eau.

4. Procédé selon l'une quelconque des revendications 1 à 3, caractérisé en ce que le mélange est serré par la pression de remplissage lors du dosage dans un moule.

5. Procédé selon l'une quelconque des revendications 1 à 4, caractérisé en ce que le mélange est serré par secousses du moule.

6. Procédé selon l'une quelconque des revendications 1 à 5, caractérisé en ce que le mélange est serré par compression à une pression jusqu'à 1000 kPa, de préférence 500 à 2000 kPa.

7. Procédé selon l'une quelconque des revendications 1 à 6, caractérisé en ce que le séchage du corps moulé pour son durcissement se fait à des températures jusqu'à 350°C, de préférence de 150 à 200°C.

8. Procédé selon l'une quelconque des revendications 1 à 7, caractérisé en ce que du silicate-phosphate polymère inhibité en forme de poudre et de l'eau sont ajoutés au mélange pour la formation de la solution silicate-phosphate là-dedans.

9. Corps moulé léger, notamment panneau isolant léger hydrofuge et calorifuge, fabriqué selon l'une quelconque des revendications 1 à 9, caractérisé en ce que le corps moulé se compose de granulés de verre expansé ou d'argile expansée comme agrégats légers et d'un emballage en liant formé par une solution silicate-phosphate aqueuse.

10. Corps moulé léger selon la revendication 9, caractérisé en ce que la grosseur des granulés de verre expansé ou d'argile expansée est de l'ordre de 0.5 jusqu'à 8 mm.

11. Corps moulé léger selon la revendication 10 ou 11, caractérisé en ce que le corps moulé est pourvu d'une couche externe imperméable, qui se compose de granulés de verre expansé ou d'argile expansée mélangés avec le liant à solution, la grosseur des granulés de la couche externe correspondant à peu près à 10 % jusqu'à 50 % de la grosseur des granulés du corps moulé propre.

12. Corps moulé léger selon l'une quelconque des revendications 9 à 11, caractérisé en ce qu'un support, de préférence en tissu de matière plastique ou métallique, est intégré dans le corps moulé.
